Europäisches Patentamt

European Patent Office

Office européen des brevets

(19)

(11) Veröffentlichungsnummer : **0 181 385**
**B1**

(12) # EUROPÄISCHE PATENTSCHRIFT

(45) Veröffentlichungstag der Patentschrift :
07.09.88

(21) Anmeldenummer : 85902510.8

(22) Anmeldetag : 07.05.85

(86) Internationale Anmeldenummer :
PCT/EP 85/00208

(87) Internationale Veröffentlichungsnummer :
WO/8505214 (21.11.85 Gazette 85/25)

(51) Int. Cl.⁴ : **G 21 B   1/00**

(54) AKTIV GEKÜHLTE EINRICHTUNG.

(30) Priorität : 07.05.84 DE 3416843

(43) Veröffentlichungstag der Anmeldung :
21.05.86 Patentblatt 86/21

(45) Bekanntmachung des Hinweises auf die Patenterteilung : 07.09.88 Patentblatt 88/36

(84) Benannte Vertragsstaaten :
AT BE CH DE FR GB IT LI LU NL

(56) Entgegenhaltungen :
Journal of Nuclear Materials 103 & 104, 1981, (Amsterdam, NL). J.R. Haines et al.: "Material consideration
for the fusion engineering device (FED) pump limiter", pages 223 to 228
Nuclear Technology/Fusion, volume 2, No. 4, October
1982, (Darville, Illinois, US). H.W. Kugel et al.: "The
design of the Poloidal Divertor experiment Tokamak
wall armor and inner limiter system", pages 712-722

(73) Patentinhaber : Max-Planck-Gesellschaft zur Förderung der Wissenschaften e.V.
Bunsenstrasse 10
D-3400 Göttingen (DE)

METALLWERK PLANSEE GESELLSCHAFT M.B.H.
A-6600 Reutte, Tirol (AT)

(72) Erfinder : KOTZLOWSKI, Heinz, Ernst
Moarstrasse 18
D-8045 Ismaning (DE)
Erfinder : KNERINGER, Günter
Kaiser-Lothar-Strasse 40
A-6600 Breitenwang bei Reutte (AT)

(74) Vertreter : von Bezold, Dieter, Dr. et al
Dr. Dieter von Bezold Dipl.-Ing. Peter Schütz Dipl.-Ing.
Wolfgang Heusler Brienner Strasse 52
D-8000 München 2 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

EP 0 181 385 B1

## Beschreibung

Die vorliegende Erfindung betrifft eine aktiv gekühlte Einrichtung mit Körpern, welche aus einem Material bestehen, das einer im Betrieb vorgesehenen Wärmebelastung thermisch zu widerstehen vermag, und welche jeweils mit mindestens einer Kühlmittel-Leitung flächig verlötet sind.

Für viele Zwecke werden thermisch hoch belastbare Wärmeabschirmungen, sogenannte « Hitzeschilde » benötigt. Ein typisches Beispiel sind Divertor und Limiter eines Fusionsreaktors. Da Hitzeschilde ein bevorzugtes Anwendungsgebiet der Erfindung sind, wird diese im folgenden am Beispiel von Hitzeschilden beschrieben. Die Erfindung ist jedoch nicht hierauf beschränkt, sondern kann auch für andere aktiv gekühlte Einrichtungen verwendet werden, wie gekühlte Ziehmatrizen zum Herstellen von Profilstäben, gekühlte Elektroden für die Schmelzelektrolyse und dergleichen.

Graphit ist, wenn er bestimmten Qualitätsanforderungen genügt, aufgrund seiner Eigenschaften ein guter Hitzeschild-Werkstoff für plasmaphysikalische Anlagen, wie Fusionsreaktoren, und andere Vakuumanlagen. Niedriges Atomgewicht, hohe Sublimationstemperatur, gute Wärmeleitung, geringe Zerstäubungsrate sind einige dieser Eigenschaften. Andererseits hat Graphit auch verschiedene Nachteile, wie Porosität, geringe mechanische Festigkeit und geringe Duktilität.

Die Porosität des Graphits verbietet im allgemeinen schon aus Dichtigkeitsgründen einen direkten Kontakt des Graphits mit einem Kühlfluid. Die geringe mechanische Festigkeit und Duktilität erschweren die Befestigung von Graphitteilen und beschränken die maximale Einsatztemperatur. Bisher konnten daher als Hitzeschild dienende Graphitkörper nur durch Strahlung oder durch Wärmekontakt mit einer die Wärme ableitenden Befestigungsstruktur gekühlt werden. Die Graphitkörper eines solchen bekannten Hitzeschildes eines Versuchs-Fusionsreaktors, wie eines Tokamak, werden daher während einer bis zu etwa 10 Sekunden dauernden Plasmaentladung adiabatisch aufgeheizt und benötigen dann mindestens etwa 10 Minuten für eine ausreichende Abkühlung. Längere Plasmaentladungen oder stationärer Betrieb ist daher bei der Verwendung der bekannten Graphit-Hitzeschilde nicht möglich.

Bei der sogenannten Ersten Wand von Fusionsreaktoren liegen ähnliche Probleme vor. Hier ist es aus dem Report JAERI-M82-174 (1982) bekannt, Siliciumcarbid-Platten auf eine ebene Stirnfläche von leistenartigen Vorsprüngen aufzulöten, welche durch im Querschnitt trapezförmige Kühlkanäle einer Basisplatte gebildet werden. Aus dem Journal of Nuclear Materials 103 & 104 (1981) 31-40 ist ferner ein Limiter bekannt, der wassergekühlte Kupferplatten enthält, auf deren Oberfläche Graphitfliesen hart aufgelötet sind. Die Festigkeit dieser ebenen 'Lötverbindungen läßt jedoch bei den unvermeidlichen Temperatur-und Druckwechselbeanspruchungen zu wünschen übrig und es entstehen häufig Risse in den Lötstellen, die den Wärmeübergang stark beeinträchtigen.

Aus der Zeitschrift Nuclear Technology/Fusion Band 2, Oktober 1982, 712-722, ist eine aktiv gekühlte Hitzeschildanordnung für die erste Wand eines Tokamaks bekannt, welche eine aktiv gekühlte, metallische Trägerstruktur und Graphitfliesen, die formschlüssig mit der Trägerstruktur verbunden sind, enthält. Die Trägerstruktur besteht aus einer EdelstahlRückplatte, auf die Leisten aus Kupfer hart aufgelötet sind, welche Schwalbenschwanznuten zur Halterung der Graphitfliesen bilden. Die Edelstahlrückplatten und die Kupferleisten sind mit einander gegenüberliegenden, im Querschnitt halbkreisförmigen Ausnehmungen versehen, in die Kupferrohr-Kühlmittelleitungen hart eingelötet sind. Die Graphitfliesen, die die abzuführende Wärme primär aufnehmen, sind also mit den Kühlmittelleitungen nicht direkt sondern nur über die Schwalbenschwanzverbindung verbunden.

Die vorliegende Erfindung löst bei einer aktiv gekühlten Einrichtung mit Körpern aus hitzebeständigem Material, die jeweils mit mindestens einer Kühlmittelleitung flächig verlötet und thermisch verbunden sind, die Aufgabe, eine sehr hohe Wärmebelastbarkeit durch sichere Wärmeableitung von den hitzebeständigen Körpern zum Kühlmittel und gleichzeitig eine mechanisch sichere und feste Verbindung zu gewährleisten, so daß sich eine höhere Belastbarkeit und/oder längere Betriebsdauer ergeben, dadurch, daß die Körper aus einem nichtmetallischen Material, wie Graphit, einem Carbid oder Keramik, oder einem metallkeramischen Verbundwerkstoff bestehen und jeweils mindestens eine im Querschnitt runde Ausnehmung aufweisen, in die ein einen entsprechenden Querschnitt aufweisender Teil eines die Kühlmittelleitung bildenden Kühlrohrs flächig eingelötet ist.

Bei der Einrichtung gemäß der Erfindung sind die metallischen Kühlrohre also direkt und flächig in eine einen entsprechenden Querschnitt aufweisende Ausnehmung des nichtmetallischen Körpers hart eingelötet, der die abzuführende Wärme primär aufnimmt. Hierdurch sind ein effektiver Wärmeübergang und gleichzeitig eine sichere sowie dauerhafte mechanische Verbindung gewährleistet. Die Geometrie ist vorzugsweise und vorteilhafterweise so gewählt, daß die Wärmeübergangsfläche zwischen dem Körper und dem Kühlrohr etwa gleich der thermisch belasteten Oberfläche des Körpers aus dem hitzebeständigen, nichtmetallischen Material ist.

Ein Körper kann auch mit mehreren Kühlrohren direkt verlötet sein.

Im folgenden werden Ausführungsbeispiele der Erfindung unter Bezugnahme auf die Zeichnungen am Beispiel von Hitzeschilden für Fusionsreaktoren näher erläutert.

Es zeigen :
Fig. 1a, Fig. 1b und Fig. 1c einen von der Seite gesehenen Längsschnitt, eine Stirnansicht bzw. eine Draufsicht eines aktiv gekühlten Hitzeschildelementes gemäß einer bevorzugten Ausführungsform der Erfindung,

Fig. 2 bis 6 Querschnittsansichten verschiedener Ausführungsformen von erfindungsgemäßen Hitzeschilden.

Fig. 7 und 8 einen Längsschnitt bzw. Querschnitt einer weiteren Ausführungsform der Erfindung mit zweiseitig gehalterten Kühlrohren.

Eine aktiv gekühlte Einrichtung gemäß der Erfindung enthält mindestens einen, im allgemeinen mehrere, z. B. streifen- oder plattenförmige Körper aus hitzebeständigem Werkstoff, die jeweils mit mindestens einem Kühlmittel-Leitungsrohr (Kühlrohr) direkt verlötet sind. Das Kühlrohr hat vorzugsweise einen kreisförmigen Querschnitt und ist an seiner ganzen Außenfläche oder über einen Teil des Umfanges der Außenfläche mit dem zu kühlenden Körper verlötet. Um einen möglichst guten Kontakt des durch das Kühlrohr strömenden Kühlmediums mit der zu kühlenden Innenwand des Kühlrohrs zu erreichen, kann das Kühlmedium durch Leitbleche im Kühlrohr wendelförmig geführt werden. An einem Körper oder Element können auch mehrere Kühlrohre angelötet sein.

Als hitzebeständige Werkstoffe werden nichtmetallische Werkstoffe und von diesen Graphit bevorzugt, so daß im folgenden von Graphitkörpern gesprochen werden wird. Entsprechendes gilt jedoch auch für andere hitzebeständige Materialien. Bei Verwendung in Fusionsreaktoren soll das Material eine niedrige Kernladungszahl Z haben. Andere geeignete Materialien außer Graphit sind z. B. Carbide wie SiC, TiC, $B_4C$, ferner $TiB_2$, Sinterwerkstoffe, Keramik, metallkeramische Verbundwerkstoffe und gewisse Metalle, wie Beryllium.

Das aus Metall bestehende Kühlrohr dient außer zur Wärmeabfuhr vorzugsweise auch als mechanischer Träger des zu kühlenden Körpers, insbesondere zur Aufnahme des Gewichts des zu kühlenden Körpers und sonstiger auf den Körper wirkender Kräfte. Dies hat den großen Vorteil, daß sich die Halterung auf der Temperatur des Kühlmittels und nicht auf der des zu kühlenden Körpers befindet. Die mechanische Befestigung des zu kühlenden Körpers am Kühlrohr erfolgt großflächig über die Lötverbindung in der Ausnehmung, also ohne Schrauben, Federn oder ähnliche Befestigungselemente. Das Kühlrohr soll dünnwandig sein, d. h. die Wandstärke soll höchstens etwa 10 % des Außendurchmessers betragen. Die Wandstärke soll jedoch ausreichen, nennenswerte Deformationen im Betrieb zu vermeiden.

Eine dauerhafte und widerstandsfähige Hartlötverbindung von Graphit mit Metall ist nur gewährleistet, wenn das Metall wenigstens annähernd den gleichen thermischen Ausdehnungskoeffizienten hat wie Graphit. Diese Forderung erfüllen beispielsweise hochschmelzende Metalle, wie Molybdän und einige Molybdänlegierungen. Da diese Materialien relativ teuer sowie schwierig zu bearbeiten und zu schweißen sind, werden vorzugsweise nur die mit einem Graphitkörper verlöteten Teile der Kühlmittelleitung aus den erwähnten Metallen hergestellt, während der übrige Teil der Kühlmittelleitungen aus konventionelleren Materialien, wie austenitischem Edelstahl hergestellt wird. Die Verbindung zwischen den Kühlrohren aus Molybdän oder Molybdänlegierung und den aus anderen Werkstoffen bestehenden Teilen der Kühlmittelleitung kann durch eine konische oder zylindrische Lötverbindung erfolgen. Vorzugsweise enthält diese Lötverbindung einen Schrumpfsitz, bei dem das Kühlmittelrohr aus austenitischem Edelstahl oder einem anderen geeigneten Werkstoff, das aus Molybdän oder einer Molybdänlegierung bestehende Kühlrohr im Schrumpfsitz umschließt, so daß die Lötung von mechanischen Zugbeanspruchungen entlastet ist.

Bei plasmaphysikalischen Geräten kann der Hitzeschild schnell veränderlichen Magnetfeldern ausgesetzt sein. In diesem Falle können die Kühlelemente fingerartig ausgeführt werden, so daß keine Leiterschleifen vorhanden sind, durch die elektromagnetische Kräfte entstehen, die den Hitzeschild übermäßig mechanisch belasten. Bei fingerartiger Ausbildung der Kühlelemente erfolgt die Kühlmittelzufuhr durch ein zweites koaxiales Rohr im eigentlichen Kühlrohr, wobei auch hier die Kühlleistung durch wendelförmige Führung des Kühlmittels erhöht werden kann.

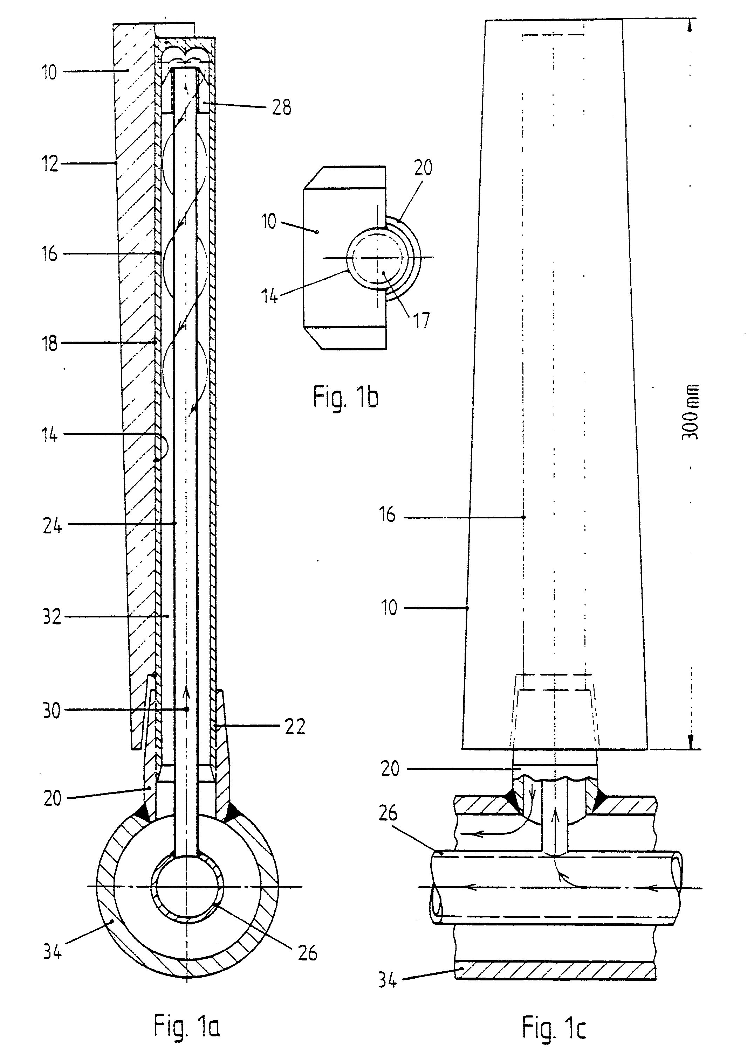

Ein Ausführungsbeispiel eines Hitzeschildelementes für einen Fusionsreaktor, bei dem die obigen Gesichtspunkte berücksichtigt sind, ist in den Figuren 1a bis 1c dargestellt. Das in Fig. 1 dargestellte Hitzeschildelement ist ein Divertorplattenelement für einen Versuchs-Fusionsreaktor des Typs A.S.D.E.X. Upgrade. Es enthält einen plattenartigen, in Draufsicht schwach trapezförmigen Körper 10 aus hochreinem Graphit, der eine ebene Oberseite 12 hat, die im Betrieb einer Wärmequelle, z. B. einer Plasmaentladung, zugewandt ist. Die Unterseite weist eine im Querschnitt U-förmige, im unteren Teil halbkreisförmige Auskehlung 14 auf, in der ein im Querschnitt kreisförmiges Kühlrohr 16 sitzt, welches über etwas mehr als die Hälfte seines Umfanges mit der Oberfläche der Auskehlung 14 des Graphitkörpers 12 hartverlötet ist, wie in Fig. 1a durch das Bezugszeichen 18 angedeutet ist. Alternativ kann das vordere Ende (in Fig. 1a links) der Auskehlung 14 erweitert sein, um Platz für eine auf das Ende des Kühlrohres hart aufgelötete Kappe (nicht dargestellt) zu schaffen.

Die Zwickel zwischen den ebenen Wandteilen der im Querschnitt U-förmigen Ausnehmung und dem Kühlrohr sind mit Lot gefüllt, um eine möglichst großflächige wärmeleitende Verbindung zwischen dem Kühlrohr und dem Graphitkörper zu schaffen.

Bei dem dargestellten Ausführungsbeispiel der Erfindung bestand das Kühlrohr 16 aus Molybdän und hatte einen Außendurchmesser von 24 mm sowie eine Wandstärke von 2 mm. Als Lot diente eine 3Titan-27Kupfer-70Silber-Legierung.

Die Hartlötung zwischen dem Graphit und dem Kühlrohr kann auch mittels eines anderen bekannten Hartlotes erfolgen, siehe z. B. die US-A-3 673 038. Als Hartlot geeignet sind z. B. auch Kupfer-Titan-Legierungen, reines Titan sowie Zirkonium und deren Legierungen. Da die Duktilität der Lote mit zunehmender Schmelztemperatur (bei den obigen Beispielen max. ca 1 670° C) abnimmt und die Verbindung dadurch leichter spröde und rißanfällig wird, wird man im allgemeinen ein möglichst niedrig schmelzendes Lot (Schmelzpunkt etwa 400 K oberhalb der Arbeitstemperatur) zu verwenden.

Das Kühlrohr 16 ist am einen Ende geschlossen und am anderen Ende mit einem Kühlmittel-Leitungsrohr 20 verbunden, das aus austenitischem nichtrostenden Edelstahl besteht. Die Verbindung zwischen dem aus Molybdän oder einer Molybdänlegierung bestehenden Kühlrohr 16 und dem aus Edelstahl oder einem anderen konventionellen Material bestehenden Leitungsrohr 20 erfolgt durch eine Hartlötverbindung 22, wobei der Innendurchmesser des Leitungsrohres 20 vorzugsweise so bemessen ist, daß das Leitungsrohr 20 im Schrumpfsitz auf dem Kühlrohr 16 sitzt und die Hartlötverbindung 22 dadurch mechanisch entlastet ist.

Die Kühlmittelzufuhr erfolgt durch ein z. B. aus Edelstahl bestehendes Innenrohr 24, das sich von einem Kühlmittelverteiler 26 koaxial in das Kühlrohr 16 erstreckt und kurz vor der Innenfläche der Kappe 17 endet, die eine ringförmige Mulde zur Strömungsumlenkung aufweist. Beim vorderen Ende des Kühlmittelzuführungsrohres 24 sind wendelförmige Leitbleche 28 im Zwischenraum zwischen den Rohren 24 und 16 angeordnet, um der Strömung des Kühlmittels einen wendelförmigen Drall zu verleihen, wie durch Pfeile angedeutet ist, so daß der Wärmeübergang zwischen der Innenwand des Kühlrohres 16 und dem Kühlmedium verbessert wird. Das Kühlmedium strömt also durch das Innere 30 des Innenrohres 24 zum vorderen Ende des Kühlrohres 16 und dann im Zwischenraum 32 zwischen den beiden Rohren 16 und 24 zurück zu einem Kühlmittelsammelrohr 34.

Durch die in Fig. 1 gezeigte streifen- oder fingerartige Gestalt der Hitzeschildelemente werden große geschlossene Leiterschleifen vermieden, in denen durch magnetische Wechselfelder unerwünschte Kräfte erzeugt werden können.

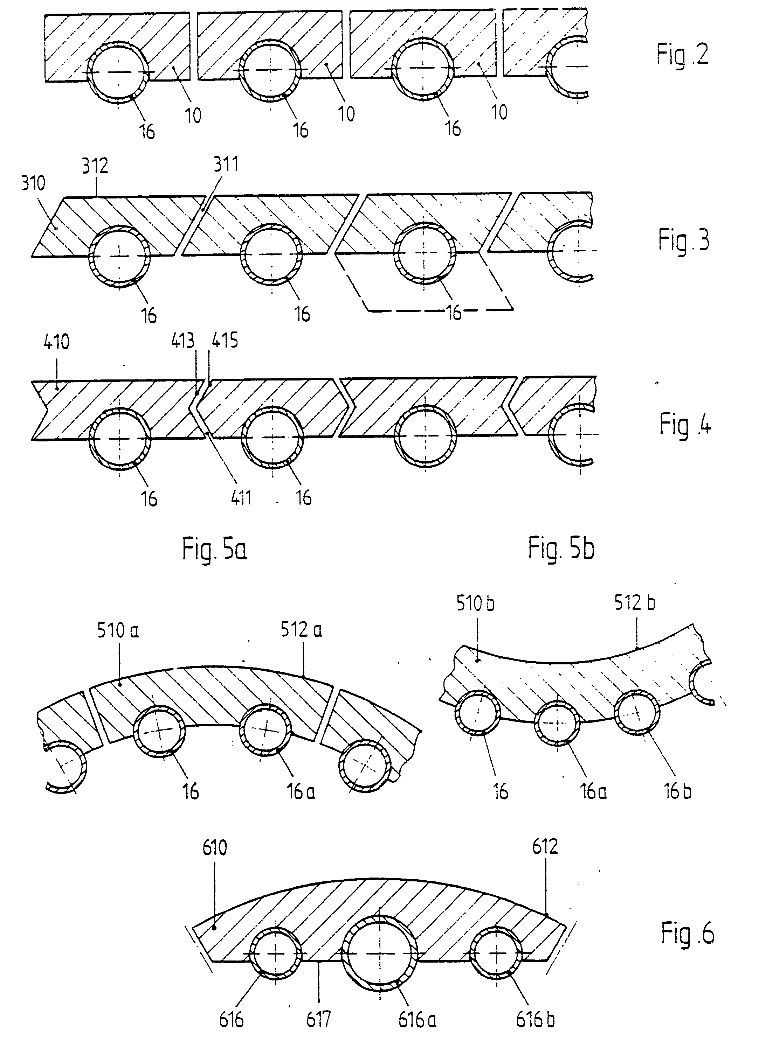

Fig. 2 zeigt etwas vereinfacht einen Querschnitt eines Teiles eines Hitzeschildes aus den Elementen gemäß Fig. 1. Da die Divertorplatten bei dem oben erwähnten Versuchsreaktor thermisch ungleichmäßig beaufschlagt werden, wurde die Dicke der Graphitkörper etwa proportional zur thermischen Belastung gewählt, um bei einer länger (z. B. 10 s) dauernden Plasmaentladung eine gleichmäßige Erwärmung der Graphitkörper zu gewährleisten.

Fig. 3 zeigt eine etwas andere Ausführungsform eines Hitzeschildes des in Fig. 2 dargestellten Typs. Die Elemente des Hitzeschilds gemäß Fig. 3 enthalten Graphitkörper 310 mit parallelogrammförmigem Querschnitt, so daß die Zwischenräume 311 zwischen den einzelnen Graphit-Hitzeschildelementen schräg zur Oberfläche 312 der Graphitkörper verläuft. Der Hitzeschild gemäß Fig. 3 ist optisch dicht, wenn die Wärmequelle so lokalisiert ist, daß keine Wärmestrahlung durch die Zwischenräume 311 durchtreten kann.

Fig. 4 zeigt einen Querschnitt eines Hitzeschildes, der auch hinsichtlich einer räumlich ausgedehnten Hitzequelle optisch dicht ist. Wie ersichtlich, enthalten die Hitzeschildelemente plattenförmige Graphitkörper 410, deren einander zugewandte Seitenflächen V-förmige Nuten 413 bzw. in diese hineinreichende komplementäre keilförmige Vorsprünge 415 aufweisen, so daß die Zwischenräume 411 abgewinkelt sind.

Fig. 5a und Fig. 5b zeigen Querschnittsansichten von Hitzeschildelementen mit gebogenen plattenförmigen Graphitkörpern 510a bzw. 510b, die eine der Wärmequelle zugewandte konvexe Oberfläche 512a bzw. konkave Oberfläche 512b aufweisen. Der Graphitkörper 510a ist auf der der Wärmequelle abgewandten Seite mit zwei Kühlrohren 16 und 16a verlötet, während der Graphitkörper 510b mit mehreren Kühlrohren 16, 16a, 16b, ... hart verlötet ist. Die Graphitkörper 510a und 510b haben eine im wesentlichen gleichmäßige Dicke.

Fig. 6 zeigt ein Ausführungsbeispiel eines Elementes eines Hitzeschildes gemäß der Erfindung, das einen im Querschnitt etwa kreissegmentförmigen Graphitkörper 610 enthält, dessen der Wärmequelle zugewandte Fläche 612 konvex ist. Die entgegengesetzte Seite 617 ist eben und weist drei Auskehlungen auf, in die drei Kühlrohre 616, 616a, 616b eingelötet sind. Das mittlere Kühlrohr 616a hat einen größeren Durchmesser als die beiden äußeren Kühlrohre 616, 616b.

Selbstverständlich ist die Verwendung mehrerer Kühlrohre für einen Graphitkörper und/oder die Verwendung von Kühlrohren unterschiedlicher Durchmesser nicht auf die in den Zeichnungen beispielsweise dargestellten Konfigurationen der Graphitkörper beschränkt. Wenn die Graphitkörper jeweils mit nur einem Kühlrohr verlötet sind, brauchen also nicht alle Kühlrohre den gleichen Durchmesser zu haben.

Das Kühlrohr oder die Kühlrohre können selbstverständlich auch vollständig von Graphit umgeben sein. So kann beispielsweise mit den Kühlrohren 16 in den Figuren 2 bis 4 auch auf der in diesen Figuren freien seite jeweils ein weiterer Graphitkörper verlötet sein, wie beispielsweise in Fig. 3 bei einem Hitzeschildelement gestrichelt angedeutet ist. Die Kühlrohre können auch in eine entsprechende Bohrung des Graphitkörpers vollflächig eingelötet werden.

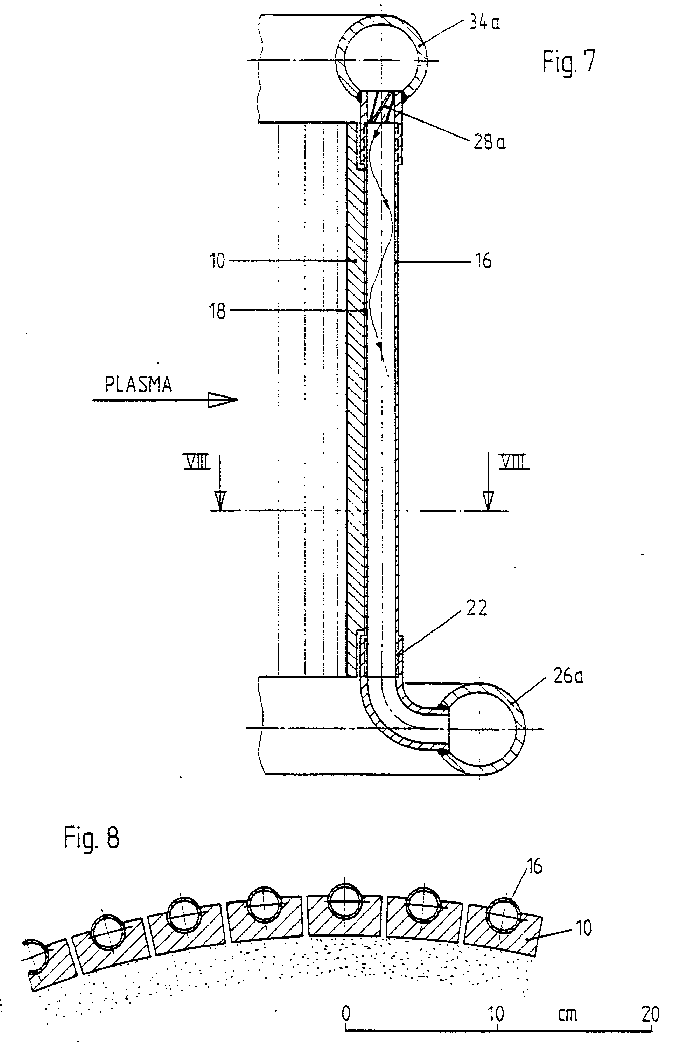

Bei dem in den Figuren 7 und 8 dargestellten Hitzeschild wird das Kühlmittel von einer Zuführungsleitung 26a dem einen, unteren Ende der Kühlröhre 16 zugeführt und tritt am oberen Ende der Kühlrohre in ein sammelrohr 34a aus. Beim Einlaßende sind im Kühlrohr 16 wendelförmige Leitbleche 28a vorgesehen, die der Kühlmittelströmung einen wendelförmigen Drall erteilen, wie anhand der Leitbleche 28 in Verbindung mit Fig. 1a erläutert wurde. Die Leitungen 26a und 34a dienen gleichzeitig zur mechanischen Halterung der Hitzeschildelemente. Im übrigen entsprechen die Hitzeschildelemente denen der Fig. 1, so daß sich eine weitere Erläuterung erübrigt.

Fig. 8 ist ein Schnitt in einer Ebene VIII-VIII der Fig. 7 und zeigt, wie mehrere Hitzeschildelemente nebeneinander angeordnet sein können. Die Auskehlungen, in die die Kühlrohre eingelötet sind, haben auch hier einen U-förmigen Querschnitt und sind etwas tiefer als der halbe Außendurchmesser des jeweils eingelöteten Kühlrohrs. selbstverständlich kann man hier auch Körper mit anderen Formen verwenden, z. B. wie sie in den Figuren 3 und 4 dargestellt sind.

Die oben beschriebenen Ausführungsbeispiele lassen sich selbstverständlich in der verschiedensten Weise abwandeln, ohne den Rahmen der Erfindung zu beschreiben. Insbesondere sind Ma-terialangaben, Abmessungen und Verwendungs-zwecke nicht einschränkend auszulegen. Für die Kühlrohre können statt Molybdän z. B. Molybdän-Legierungen oder auch billigere Werkstoffe, wie Ni-Fe- oder Ni-Fe-Co-Legierungen verwendet werden, wenn beispielsweise die magnetischen Eigenschaften keine Rolle spielen und die Betriebstemperaturen nicht zu hoch sind.

## Patentansprüche

1. Aktiv gekühlte Einrichtung mit Körpern, welche aus einem Material bestehen, das einer im Betrieb vorgesehenen Wärmebelastung thermisch zu widerstehen vermag, und welche jeweils mit mindestens einer Kühlmittel-Leitung flächig verlötet sind, dadurch gekennzeichnet, daß die Körper (10) aus einem nichtmetallischen Material, wie Graphit, einem Carbid oder Keramik, oder einem metallkeramischen Verbundwerkstoff bestehen und jeweils mindestens eine im Querschnitt runde Ausnehmung (14) aufweisen, in die ein einen entsprechenden Querschnitt aufweisender Teil eines die Kühlmittel-Leitung bildenden Kühlrohrs (16) flächig eingelötet ist.

2. Einrichtung nach Anspruch 1, dadurch gekennzeichnet, daß die Ausnehmung eine Auskehlung mit zylindrischer Oberfläche ist und das Kühlrohr einen kreisförmigen Querschnitt hat.

3. Einrichtung nach Anspruch 2, dadurch gekennzeichnet, daß die Auskehlung einen U-förmigen Querschnitt hat und tiefer ist als der halbe Außendurchmesser des Kühlrohres.

4. Einrichtung nach Anspruch 1, dadurch gekennzeichnet, daß die Körper jeweils mindestens eine Bohrung aufweisen, in die ein Kühlrohr eingelötet ist.

5. Einrichtung nach Anspruch 1, dadurch gekennzeichnet, daß die Kühlrohre aus jeweils einem Metall, das wenigstens annähernd den gleichen Wärmeausdehnungskoeffizienten hat wie das hitzebeständige Material, bestehen und jeweils mit einer Kühlmittelleitung (20) aus einem anderen Werkstoff verbunden sind.

6. Einrichtung nach Anspruch 5, dadurch gekennzeichnet, daß die Verbindung zwischen dem Kühlrohr (16) und der Kühlmittelleitung (20) einen Schrumpfsitz enthält.

7. Einrichtung nach Anspruch 1, dadurch gekennzeichnet, daß die Körper (10) mechanisch ausschließlich über die Kühlrohre (16) gehalten sind.

8. Einrichtung nach Anspruch 1, dadurch gekennzeichnet, daß mindestens einer der Körper (610) mit mehreren Kühlrohren (616, 616a) unterschiedlicher Durchmesser verlötet ist.

9. Einrichtung nach Anspruch 1, dadurch gekennzeichnet, daß die Körper die Form länglicher Streifen haben.

10. Einrichtung nach Anspruch 1, dadurch gekennzeichnet, daß die Körper mit Zwischenräumen (311, 411) nebeneinander angeordnet sind, die eine solche Konfiguration haben, daß Wärme-strahlung von einer abzuschirmenden Wärme-quelle nicht geradlinig durch die Zwischenräume hindurchtreten kann.

## Claims

1. Actively cooled installation including bodies which comprise a material which can thermally resist a heat load present in operation and which are each brazed over a large area to at least one cooling medium line, characterized in that the bodies (10) comprise a non-metallic material, such as graphite, a carbide or ceramic, or a metal-ceramic composite material and each have at least one recess (14) of round cross-section into which a portion having a corresponding cross-section of a cooling tube (16) defining the cooling medium line is brazed over a large area.

2. Installation as claimed in claim 1, characterized in that the recess is a channel with a cylindrical surface and the cooling tube has a circular cross-section.

3. Installation as claimed in claim 2, characterized in that the channel has a U-shaped cross-section and is deeper than one-half the external diameter of the cooling tube.

4. Installation as claimed in claim 1, characterized in that the bodies each have at least one bore into which a cooling tube is brazed.

5. Installation as claimed in claim 1, characterized in that the cooling tubes each comprise a metal which has at least approximately the same coefficient of thermal expansion as the heat-resistant material and are each connected to a cooling medium line (20) of a different material.

6. Installation as claimed in claim 5, characterized in that the connection between the cooling tube (16) and the cooling medium line (20) includes a shrink fit.

7. Installation as claimed in claim 1, characterized in that the bodies (10) are mechanically mounted exclusively via the cooling tubes (16).

8. Installation as claimed in claim 1, characterized in that at least one of the bodies (610) is brazed to a plurality of cooling tubes (616, 616a) of differing diameter.

9. Installation as claimed in claim 1, characterized in that the bodies have the shape of elongate strips.

10. Installation as claimed in claim 1, characterized in that the bodies are arranged next to one another with spaces (311, 411) which have such a configuration that thermal radiation from a heat source to be shielded cannot pass in a straight line through the spaces.

## Revendications

1. Installation soumise à un refroidissement actif comportant des corps constitué en un matériau pouvant résister thermiquement en fonctionnement, à une charge calorifique prévue et qui sont brasés chacun thermiquement par une surface étendue à au moins une canalisation contenant un fluide réfrigérant, caractérisé en ce que les corps en question (10) sont constitués par un matériau non métallique comme le graphite, un carbure ou une matière céramique, ou encore par un cermet et ils comportent chacun au moins un évidement (14) qui a une section transversale ronde et dans lequel est insérée et brasée par une surface étendue une partie, de section transversale correspondante, d'un tube de réfrigération (16) qui constitue la canalisation de circulation du fluide réfrigérant.

2. Installation suivant la revendication 1 caractérisé en ce que l'évidement est une gorge présentant une surface cylindrique et le tube de réfrigération a une section circulaire.

3. Installation suivant la revendication 2 caractérisé en ce que la gorge a une section en U et a une profondeur supérieure à la moitié du diamètre extérieur du tube de réfrigération.

4. Installation suivant la revendication 1 caractérisé en ce que les corps comportent chacun au moins un alésage dans lequel un tube de réfrigération est fixé par brasage.

5. Installation suivant la revendication 1 caractérisé en ce que les tubes de réfrigération sont constitués par un métal qui a au moins approximativement le même coefficient de dilatation thermique que le matériau résistant à la chaleur et ils sont reliés chacun à une canalisation (20) contenant le fluide réfrigération et qui est constituée par un autre matériau.

6. Installation suivant la revendication 5 caractérisé en ce que la liaison entre le tube de réfrigération (16) et la canalisation (20) contenant le fluide réfrigérant comprend un ajustement fretté.

7. Installation suivant la revendication 1 caractérisé en ce que les corps (10) sont maintenus mécaniquement uniquement par l'intermédiaire des tubes de réfrigération (16).

8. Installation suivant la revendication 1 caractérisé en ce que l'un au moins des corps (610) est brasé à plusieurs tubes de réfrigération (616, 616a) de différents diamètres.

9. Installation suivant la revendication 1 caractérisé en ce que les corps ont la forme de bandes allongées.

10. Installation suivant la revendication 1 caractérisé en ce que les corps sont disposés les uns à côté des autres de manière à laisser des espaces intermédiaires (311, 411) qui sont placés de telle manière que le rayonnement calorifique qui provient d'une source thermique de laquelle il faut se protéger, ne puisse pas passer en ligne droite à travers les espaces intermédiaires.

Fig. 1b

Fig. 1a

Fig. 1c

300 mm

Fig. 2

Fig. 3

Fig. 4

Fig. 5a

Fig. 5b

Fig. 6

Fig. 7

34a

28a

PLASMA →

VIII        VIII

10        16

18

22

26a

Fig. 8

16

10

0        10        cm        20